# FASCICULE DE BREVET EUROPEEN

(11) **EP 3 286 025 B1**
(45) Date de publication et mention de la délivrance du brevet: **13.03.2019**
(21) Numéro de dépôt: 16721197.8
(22) Date de dépôt: 18.04.2016
(51) Int. Cl.: B60H 1/00, G01N 15/06, B60H 3/06

(54) **DISPOSITIF D'ESTIMATION DE LA CONCENTRATION MASSIQUE DE PARTICULES FINES CONTENUES DANS L'AIR D'UNE ENCEINTE**
VORRICHTUNG ZUR SCHÄTZUNG DER MASSENKONZENTRATION VON FEINPARTIKELN IN DER LUFT EINER KAMMER
DEVICE FOR ESTIMATING THE MASS CONCENTRATION OF FINE PARTICLES CONTAINED IN THE AIR OF A CHAMBER

(30) Priorité: 24.04.2015 FR 1553684
(43) Date de publication de la demande: 28.02.2018
(73) Titulaire: PSA AUTOMOBILES S.A., 78300 Poissy (FR)
(72) Inventeur: PINTAT, Bruno, 92140 Clamart (FR); DUMUR, Denis, 78990 Elancourt (FR); ANDRE, Patrick, 92160 Antony (FR)
(86) Numéro de dépôt international: PCT/FR2016/050897
(87) Numéro de publication internationale: WO 2016/170257

(56) Documents cités:
- DE-A1-102009 046 828
- US-A1- 2008 041 138

## Description

L'invention concerne l'estimation de la pollution de l'air présent à l'intérieur d'une enceinte, et plus précisément l'estimation de la concentration massique de particules fines contenues dans cet air intérieur.

Certains systèmes, comme par exemple certains véhicules, généralement de type automobile, comprennent au moins une enceinte qui est alimentée en air par une installation de traitement d'air, comme par exemple une installation de chauffage et/ou climatisation. Ces installations étant alimentées en air extérieur, l'air qui est présent à l'intérieur de l'enceinte associée est donc pollué lorsque cet air extérieur contient des polluants, tels que des poussières (de tailles importantes), des particules fines (par exemple de type PM10, PM2,5 et PM1), et des gaz inodores (par exemple de l'oxyde d'azote (ou NO₂) ou de l'oxyde de carbone (ou CO)), ou odorants (par exemple un gaz carboné de type CₓH_{y}).

Afin de réduire la pollution dans l'enceinte, ces installations comprennent un filtre de dépollution « principal », placé en amont ou en aval de leur pulseur. Elles peuvent également comprendre un filtre de dépollution « auxiliaire » qui est soit placé en amont de leur pulseur et alimenté temporairement et exclusivement en air intérieur (ou recirculé), soit placé directement dans l'enceinte et alimenté temporairement et exclusivement en air intérieur (ou recirculé). Ce filtre de dépollution auxiliaire est utilisé temporairement lorsqu'un dispositif de surveillance détecte que la concentration d'au moins un polluant contenu dans l'air intérieur ou dans l'air devant alimenter l'enceinte est supérieure à un seuil prédéfini. Cette détection se fait grâce à des mesures de concentration qui sont effectuées par au moins un capteur de qualité d'air.

Hélas, les capteurs (de qualité d'air) qui sont actuellement utilisés sont soit inadaptés à la mesure de la concentration massique des particules fines ayant des dimensions inférieures à 2,5 µm (PM2,5), soit adaptés à la mesure de la concentration massique des particules fines ayant des dimensions inférieures à 2,5 µm mais très onéreux.

De plus, certains capteurs utilisés ont tendance à dériver au cours du temps, éventuellement en fonction de la concentration, et donc délivrent assez rapidement des mesures qui ne sont plus fiables. On pourrait, certes, étalonner régulièrement ces capteurs, mais cela s'avère assez compliqué à réaliser.

Un tel capteur de l'état de la technique est connu de US2008/0041138 A1.

Un autre dispositif pour estimer une concentration d'un polluant contenu dans l'air intérieur d'un habitacle en fonction d'une concentration d'un polluant contenu dans l'air extérieur à l'habitacle est connu de DE10 2009 046 828 A1.

L'invention a donc notamment pour but d'améliorer la situation pour ce qui concerne l'estimation de la concentration massique de particules fines contenues dans l'air présent à l'intérieur d'une enceinte.

Elle propose notamment à cet effet un dispositif destiné à estimer une première concentration massique de particules fines contenues dans l'air intérieur d'une enceinte qui est associée à une installation de traitement d'air, l'installation comprenant au moins un filtre de dépollution. Ce dispositif comprend également des moyens de calcul agencés pour estimer cette première concentration massique en fonction au moins d'une seconde concentration massique de particules fines contenues dans l'air extérieur à l'enceinte et alimentant cette dernière via l'installation, d'un spectre granulométrique de l'air extérieur, d'au moins une caractéristique technique et d'au moins un paramètre de fonctionnement en cours de l'installation, et d'un volume de l'enceinte.

Ce dispositif se caractérise par le fait que lesdites caractéristiques techniques de ladite installation sont choisies dans un groupe comprenant un type dudit filtre de dépollution, une section de passage d'air dudit filtre de dépollution, une épaisseur dudit filtre de dépollution, et un nombre de plis dudit filtre de dépollution, et lesdits paramètres de fonctionnement en cours de ladite installation sont choisis dans un groupe comprenant une usure en cours dudit filtre de dépollution, un débit d'air traversant ledit filtre de dépollution, et une proportion d'air extérieur alimentant ladite enceinte.

On peut ainsi, grâce à un calcul relativement simple, estimer la concentration massique de particules fines contenues dans l'air intérieur d'une enceinte, ce qui permet de s'affranchir de l'utilisation d'un capteur de qualité de l'air pour les particules fines.

Le dispositif d'estimation selon l'invention peut comporter d'autres caractéristiques qui peuvent être prises séparément ou en combinaison, et notamment :
- ses moyens de calcul peuvent être agencés pour récupérer, via un module de communication associé à l'enceinte, des informations qui sont représentatives de la seconde concentration massique et du spectre granulométrique, auprès d'au moins un site d'informations accessible via au moins un réseau de communication ;
- ses moyens de calcul peuvent être agencés pour estimer la première concentration massique en fonction également de paramètres météorologiques en cours de l'air extérieur et de l'air intérieur ;
- ses moyens de calcul peuvent être agencés pour estimer la première concentration massique en fonction également d'une position géographique en cours de l'enceinte ;
- ses moyens de calcul peuvent être agencés pour estimer la première concentration massique en fonction également d'une durée d'ouverture d'au moins un ouvrant de l'enceinte.

L'invention propose également un véhicule, éventuellement de type automobile, et comprenant une enceinte, définissant un habitacle et alimentée en air par une installation de traitement d'air, et un dispositif d'estimation du type de celui présenté ci-avant.

D'autres caractéristiques et avantages de l'invention apparaîtront à l'examen de la description détaillée ci-après, et du dessin annexé, sur lequel l'unique figure illustre schématiquement et fonctionnellement un exemple d'installation de chauffage/climatisation installée dans un véhicule et couplée à un exemple de réalisation d'un dispositif d'estimation selon l'invention.

L'invention a notamment pour but de proposer un dispositif DE destiné à estimer une première concentration massique cm1 de particules fines contenues dans l'air intérieur d'une enceinte H d'un système S comprenant une installation de traitement d'air IT.

Dans ce qui suit, on considère, à titre d'exemple non limitatif, que le système S est un véhicule automobile, comme par exemple une voiture. L'enceinte H du véhicule S est donc son habitacle. Mais l'invention n'est pas limitée à ce type de système. Elle concerne en effet tout type de véhicule, terrestre, maritime (ou fluvial), ou aérien, et tout type de bâtiment, dès lors que ce dernier comprend au moins une enceinte destinée à être alimentée en air traité par une installation de traitement d'air.

Par ailleurs, on considère dans ce qui suit, à titre d'exemple non limitatif, que l'installation de traitement d'air IT est une installation de chauffage/climatisation. Mais l'invention n'est pas limitée à ce type d'installation de traitement d'air. Elle concerne en effet tout type d'installation de traitement d'air comprenant au moins un filtre de dépollution FD1 et un pulseur PU. Ainsi, il pourrait s'agir, par exemple, d'une installation de chauffage, d'une installation de climatisation, d'une installation dédiée à la dépollution, ou d'un ventilateur.

On a schématiquement et fonctionnellement représenté sur l'unique figure un exemple d'installation de traitement d'air IT (ici une installation de chauffage/climatisation) implantée dans un véhicule (ou système) S et couplée à un exemple de réalisation d'un dispositif d'estimation DE selon l'invention. Ici, l'installation de chauffage/climatisation IT est implantée dans le compartiment moteur CO du véhicule (ou système) S et destinée à alimenter l'habitacle (ou enceinte) H en air traité.

Comme illustré, cette installation (de chauffage/climatisation) IT comprend notamment un pulseur PU, au moins un premier filtre de dépollution FD1, une boucle froide (ou boucle de climatisation) BF, une boucle chaude (ou boucle de chauffage) BC, un volet d'alimentation VA, un volet de mixage VM et des volets de distribution Vj.

Le pulseur PU est alimenté en air issu de l'extérieur de l'habitacle H et/ou en air issu de l'intérieur de l'habitacle H (ou air recirculé (ou recyclé)) par le volet d'alimentation (ou d'entrée d'air) VA. L'air extérieur est issu d'un premier conduit C1, et l'air recirculé est issu de l'habitacle H via un second conduit C2. Le débit d'air fourni par le pulseur PU dépend du niveau de puissance qui a été automatiquement calculé par un calculateur CS qui gère l'installation IT, ou bien choisi (et éventuellement programmé) par un passager du véhicule S au moyen d'un organe de commande qui est installé dans l'habitacle H, généralement dans la planche de bord.

La position du volet d'alimentation VA, et donc les proportions d'air extérieur et d'air recirculé qui alimentent l'installation IT (et ici son pulseur PU), est/sont contrôlée(s) par le calculateur CS.

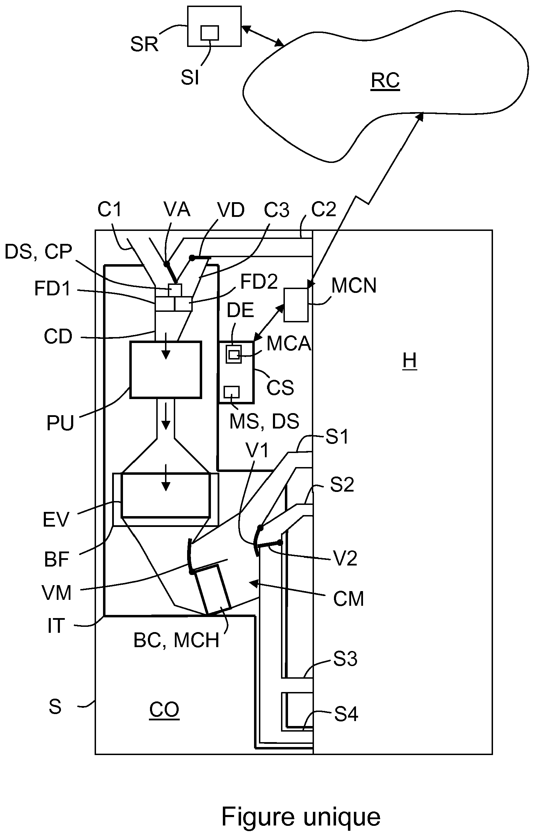

Le premier filtre de dépollution FD1 est chargé de filtrer dans l'air qui l'alimente au moins une espèce chimique sous forme solide (comme par exemple des particules fines ou des poussières) ou sous forme gazeuse (comme par exemple CO, O₃, SO₂, NO₂, O₂ ou CO₂), et/ou de déshumidifier cet air qui l'alimente. Dans l'exemple illustré non limitativement sur la figure 1, le premier filtre de dépollution FD1 est installé dans un conduit CD situé en amont du pulseur PU et en aval du volet d'alimentation VA. Mais il pourrait être implanté en d'autres lieux situés en aval du pulseur PU.

La boucle froide BF est alimentée en air par le pulseur PU. Elle comporte notamment un évaporateur EV (traversé par l'air qui est issu du pulseur PU), ainsi qu'un compresseur, un condenseur et un circuit dans lequel circule un fluide frigorigène et qui est couplé à l'évaporateur EV, au compresseur et au condenseur.

La sortie de l'évaporateur EV est couplée à un conduit qui alimente ici, d'une part, une chambre de mixage CM présentant une première entrée dont l'accès est contrôlé par le volet de mixage VM, et, d'autre part, la boucle chaude BC dont l'accès est contrôlé par le volet de mixage VM et la sortie alimente une seconde entrée de la chambre de mixage CM.

La boucle chaude BC est destinée à chauffer l'air qui est issu (ici) de l'évaporateur EV et qui est destiné à l'habitacle H du véhicule S, éventuellement après un mélange avec de l'air moins chaud présent dans la chambre de mixage CM. Elle comprend des moyens de chauffage MCH comportant, par exemple, un aérotherme, comme par exemple un échangeur de chaleur (dans lequel circule un liquide qui est éventuellement chauffé par des résistances électriques de chauffage (par exemple de type CTP haute tension), ou par un réchauffeur à combustion thermique), et/ou un radiateur électrique, par exemple constitué de résistances électriques de chauffage (par exemple de type CTP haute tension). Ces moyens de chauffage MCH sont chargés, lorsqu'ils fonctionnent, de réchauffer l'air qui les traverse et qui est issu (ici) de l'évaporateur EV, afin de délivrer de l'air réchauffé sur leur sortie qui alimente la seconde entrée de la chambre de mixage CM.

La chambre de mixage CM est connectée à des conduits qui sont, ici, destinés à alimenter des bouches de distribution placées dans l'habitacle H du véhicule S et dédiées au dégivrage S1, à l'aération centrale S2, aux pieds avant S3 et aux pieds arrière S4. L'accès à ces conduits est contrôlé par les volets de distribution Vj (ici au nombre de deux (j = 1 ou 2), mais il pourrait y en avoir plus, par exemple trois ou quatre). On notera que le volet de distribution V2 contrôle ici l'accès à un conduit qui alimente les bouches de pieds avant S3 et de pieds arrière S4. Mais on pourrait prévoir deux volets de distribution pour contrôler les accès respectivement aux bouches de pieds avant S3 et bouches de pieds arrière S4. On notera également que ces différents volets de distribution Vj sont généralement couplés entre eux par une cinématique qui est par exemple mue par un ou deux micromoteurs.

Les positions respectives des volets de distribution Vj dépendent des bouches de distribution au niveau desquelles un passager du véhicule S souhaite que l'air traité, issu de l'installation IT, soit délivré. Ces bouches de distribution peuvent être choisies par le passager au moyen d'au moins un organe de commande installé dans l'habitacle H, généralement dans la planche de bord.

Le volet de mixage VM est destiné à contrôler la répartition de l'air, qui est fourni par le volet d'alimentation VA (et qui a ici traversé l'évaporateur EV), entre la chambre de mixage CM et les moyens de chauffage MCH. Il permet donc de mélanger (ou mixer) de façon contrôlée une partie de l'air qui a traversé la boucle froide BF (éventuellement en fonctionnement) et l'air qui a traversé la boucle chaude BC. Sa position dépend du mode de fonctionnement de l'installation IT.

Le mode de fonctionnement de l'installation IT est choisi par un usager du véhicule S ou par le calculateur CS, éventuellement en fonction de choix effectué(s) par un usager du véhicule S. Dans tous les cas, la mise en oeuvre du mode de fonctionnement choisi est contrôlée par le calculateur CS et implique un fonctionnement de l'un au moins des éléments que sont le pulseur PU, la boucle froide BF, la boucle chaude BC, le volet d'alimentation VA, le volet de mixage VM et les volets de distribution Vj.

On notera que dans l'exemple illustré non limitativement sur l'unique figure, l'installation IT comprend également un dispositif de surveillance DS comportant au moins un capteur de qualité d'air CP et des moyens de surveillance MS. Le (chaque) capteur (de qualité d'air) CP est installé sous le capot moteur (et donc à l'extérieur de l'habitacle H). Par exemple et comme illustré non limitativement sur l'unique figure, ce (chaque) capteur CP peut être installé dans le conduit CD (ou à l'entrée du conduit CD) en amont du premier filtre de dépollution FD1, de manière à permettre une analyse, avant filtrage, de l'air extérieur et/ou de l'air intérieur (ou recirculé) selon les besoins. Mais un capteur CP peut être installé en d'autres endroits, et notamment dans le premier conduit C1 d'alimentation en air extérieur, ou dans le second conduit C2 d'alimentation en air intérieur (ou recirculé), ou dans l'habitacle H.

Par exemple, un capteur CP peut comporter au moins un élément résistif en technologie MOX (« Metal Oxyde semi-conducteur ») et ayant une résistance variant en fonction de la concentration d'un unique gaz inodore, comme par exemple l'oxyde d'azote (ou NO₂) ou l'oxyde de carbone (ou CO), ou odorant, comme par exemple un gaz carboné de type CₓH_{y}. De préférence, le capteur CH comporte au moins deux éléments résistifs différents de manière à mesurer des premières valeurs d'au moins deux résistances représentatives des concentrations respectives d'au moins deux gaz différents.

Les moyens de surveillance MS sont agencés pour comparer chaque mesure effectuée par un capteur CP à un seuil prédéfini et associé, et à déclencher une stratégie adaptée d'alimentation de l'installation IT et/ou de dépollution de l'habitacle H lorsqu'au moins une mesure est supérieure au seuil associé. Cette stratégie dépend du lieu où est implanté le capteur CP et donc de l'air qu'il peut analyser.

Par exemple, lorsque le capteur CP est implanté en amont du volet d'alimentation VA et chargé d'analyser l'air extérieur, le franchissement d'un seuil de détection peut déclencher une interdiction de l'alimentation de l'enceinte en air extérieur (et donc seul de l'air recirculé (c'est-à-dire issu de l'enceinte) alimente l'installation), sauf pendant de très courtes périodes destinées à régénérer l'air intérieur en oxygène.

Lorsque le capteur CP est implanté en aval du volet d'alimentation VA, comme illustré, il peut analyser l'air extérieur et l'air recirculé, et donc permet de connaître aussi bien le niveau de pollution à l'extérieur de l'enceinte que le niveau de pollution dans l'enceinte dans certains modes de fonctionnement de l'installation IT. On peut alors mettre en oeuvre des stratégies un peu plus complexes que celle présentée dans le paragraphe précédent. Ainsi, on peut, par exemple, contraindre l'air intérieur à traverser un second filtre de dépollution FD2, qui est éventuellement adapté aux particules fines dont les dimensions sont inférieures à 0,1 µm.

Pour ce faire, on peut, comme illustré non limitativement, prévoir dans l'installation IT un conduit de dérivation C3 ayant une entrée débouchant dans le second conduit C2 et une sortie débouchant dans le conduit CD, et un volet de dépollution VD contrôlant l'accès au conduit de dérivation C3. On comprendra que lorsque les moyens de surveillance MS décident de réaliser une dépollution ils peuvent placer le volet d'alimentation VA dans une position interdisant l'entrée d'air extérieur dans l'installation IT et le volet de dépollution VD dans une position contraignant l'intégralité de l'air intérieur pénétrant dans le second conduit C2 à emprunter le conduit de dérivation C3 pour traverser le second filtre de dépollution FD2.

Dans l'exemple non limitatif illustré sur l'unique figure, les moyens de surveillance MS sont implantés dans le calculateur CS. Mais cela n'est pas obligatoire. En effet, ils pourraient être implantés dans un équipement électronique comprenant également le capteur CP. Par conséquent, les moyens de surveillance MS peuvent être réalisés sous la forme de modules logiciels (ou informatiques ou encore « software »), ou bien d'une combinaison de circuits électroniques (ou « hardware ») et de modules logiciels.

Comme illustré sur l'unique figure, le dispositif d'estimation DE comprend au moins des moyens de calcul MCA. Dans l'exemple non limitatif illustré sur l'unique figure, les moyens de calcul MCA sont implantés dans le calculateur CS. Mais cela n'est pas obligatoire. En effet, ils pourraient être implantés dans un équipement électronique différent du calculateur CS ou bien constituer un équipement électronique. Ainsi, le dispositif d'estimation DE (et en particulier ses moyens de calcul MCA) pourrai(en)t faire partie du dispositif de surveillance DS. Par conséquent, le dispositif d'estimation DE (et en particulier ses moyens de calcul MCA) peu(ven)t être réalisé(s) sous la forme de modules logiciels (ou informatiques ou encore « software »), ou bien d'une combinaison de circuits électroniques (ou « hardware ») et de modules logiciels.

Les moyens de calcul MCA sont agencés pour estimer la première concentration massique cm1 (de particules fines contenues dans l'air intérieur présent dans l'habitacle H) en fonction au moins d'une seconde concentration massique cm2 de particules fines contenues dans l'air situé à l'extérieur de l'habitacle H et alimentant ce dernier (H) via l'installation IT, d'un spectre granulométrique sg2 de cet air extérieur, d'au moins une caractéristique technique et d'au moins un paramètre de fonctionnement en cours de l'installation IT, et du volume de l'habitacle H.

La première concentration massique cm1 est donc ici estimée par le calcul et non plus par un capteur embarqué, ce qui permet de réduire notablement les coûts et d'éviter d'avoir à effectuer de fréquents réétalonnages.

De préférence, les moyens de calcul MCA sont agencés pour récupérer, via un module de communication MCN qui est associé à l'habitacle H, des informations qui sont représentatives de la seconde concentration massique cm2 et du spectre granulométrique sg2, auprès d'au moins un site d'informations SI qui est accessible via au moins un réseau de communication RC.

Ce site d'information SI est par exemple hébergé par un serveur SR qui est connecté au réseau de communication RC, et mis à disposition par une entreprise publique ou privée qui comprend des stations de mesure de la qualité de l'air. Dans l'exemple qui est ici décrit, les stations de mesure sont installées à proximité de voies de circulation qui sont empruntées par les véhicules. Ces mesures sont des informations qui sont représentatives de la seconde concentration massique cm2 et du spectre granulométrique sg2 à l'endroit où elles sont réalisées. Les valeurs qui constituent les résultats de ces mesures et les positions géographiques des endroits où elles ont été mesurées sont transmises par voie d'ondes au module de communication MCN du véhicule V, soit automatiquement, soit à la demande du dispositif d'estimation DE, et plus précisément de ses moyens de calcul MCA.

On notera que les informations qui sont récupérées auprès du site d'informations SI sont soit des valeurs de secondes concentrations massiques cm2, soit des valeurs à partir desquelles les moyens de calcul MCA peuvent déterminer des secondes concentrations massiques cm3.

On notera également que dans une variante de réalisation les informations qui sont représentatives de la seconde concentration massique cm2 et du spectre granulométrique sg2 pourraient être récupérées, via le module de communication MCN, auprès des autres véhicules situés dans l'environnement du véhicule S.

Plus le spectre granulométrique sg2 est composé de particules ultra fines en amont d'un filtre de dépollution FD1 ou FD2, plus l'efficacité de dépollution de ce filtre de dépollution FD1 ou FD2 est faible.

Le spectre granulométrique sg2 est lié au type de pollution analysé, lequel est généralement lié à la zone géographique dans laquelle circule le véhicule. On peut donc, par exemple, associer au spectre granulométrique sg2 un paramètre dont la valeur dépend de la zone géographique dans laquelle est commercialisé le véhicule, et utiliser ce paramètre dans le calcul de cm1.

Plus la seconde concentration massique cm2 est élevée, plus l'efficacité de la dépollution est importante. A titre d'exemples, l'efficacité de la dépollution est d'environ 60% pour une seconde concentration massique cm2 d'environ 100 µg/m³, d'environ 80% pour une seconde concentration massique cm2 d'environ 300 µg/m³, et d'environ 90% pour une seconde concentration massique cm2 d'environ 500 µg/m³.

En fonction de la valeur en cours de la seconde concentration massique cm2, une pondération peut être utilisée dans le calcul pour en déduire le pourcentage d'efficacité que l'on doit affecter au calcul (en fonction des valeurs données dans le précédent paragraphe à titre indicatif).

Lorsque l'installation IT comprend au moins un premier filtre de dépollution FD1, les caractéristiques techniques de l'installation IT peuvent, par exemple, être choisies parmi le type du premier filtre de dépollution FD1, une section de passage d'air du premier filtre de dépollution FD1, une épaisseur du premier filtre de dépollution FD1, et un nombre de plis du premier filtre de dépollution (lorsqu'il est en technologie plissée). De même, les paramètres de fonctionnement en cours de l'installation IT peuvent, par exemple, être choisis parmi au moins l'usure en cours du premier filtre de dépollution FD1, un débit d'air traversant le premier filtre de dépollution FD1, et une proportion d'air extérieur alimentant l'habitacle H.

En variante, lorsque l'installation IT comprend des premier FD1 et second FD2 filtres de dépollution, les caractéristiques techniques de l'installation IT peuvent, par exemple, être choisies parmi le type du premier filtre de dépollution FD1 et/ou le type du second filtre de dépollution FD2, une section de passage d'air du premier filtre de dépollution FD1 et/ou une section de passage d'air du second filtre de dépollution FD2, une épaisseur du premier filtre de dépollution FD1 et/ou une épaisseur du second filtre de dépollution FD2, et un nombre de plis du premier filtre de dépollution FD1 (lorsqu'il est en technologie plissée) et/ou un nombre de plis du second filtre de dépollution FD2 (lorsqu'il est en technologie plissée). De même, les paramètres de fonctionnement en cours de l'installation IT peuvent, par exemple, être choisis parmi au moins l'usure en cours du premier filtre de dépollution FD1 et/ou du second filtre de dépollution FD2, un débit d'air traversant le premier filtre de dépollution FD1 et/ou le second filtre de dépollution FD2, et une proportion d'air extérieur alimentant l'habitacle H.

Les caractéristiques techniques de l'installation IT sont connues des moyens de calcul MCA. Elles sont par exemple stockées dans des moyens de stockage du dispositif d'estimation DE. Ces moyens de stockage sont éventuellement de type logiciel. Les paramètres de fonctionnement en cours de l'installation IT sont connus du calculateur CS, et donc peuvent être facilement récupérés par les moyens de calcul MCA.

De façon préférentielle un filtre de dépollution FD1 ou FD2 est de type HEPA afin de filtrer 99,97% des particules fines ayant des dimensions supérieures ou égales à 0,3 µm. Cependant l'utilisation dans un véhicule d'un filtre de type HEPA est rarement possible du fait qu'il introduit des pertes de charge aérauliques importantes, et donc on est fréquemment contraint d'utiliser un filtre à haute efficacité qui ne peut que filtrer environ 70% des particules fines ayant des dimensions supérieures ou égales à 0,3 µm. Les caractéristiques des filtres de dépollution sont connues grâce à des essais organiques et/ou des essais sur véhicules, et donc peuvent être utilisées lors de la calibration du calcul de cm1.

Le volume de l'habitacle H est connu en m³. Plus le volume de l'habitacle H est grand, plus l'efficacité de dépollution d'un filtre de dépollution FD1 ou FD2 est faible. Il est donc possible d'utiliser dans le calcul de cm1 une pondération représentative de l'influence du volume de l'habitacle H.

Les caractéristiques techniques intrinsèques du premier filtre de dépollution FD1 (section de passage d'air, épaisseur et éventuel nombre de plis) peuvent, par exemple, induire une efficacité de dépollution égale à 30% pour les particules fines ayant des dimensions supérieures à 0,01 µm, égale à 50% pour les particules fines ayant des dimensions supérieures à 0,03 µm, égale à 75% pour les particules fines ayant des dimensions supérieures à 1 µm, et égale à 97% pour les particules fines ayant des dimensions supérieures à 2,5 µm.

Le débit d'air passant par un filtre de dépollution FD1 ou FD2 peut, par exemple, être déduit par les moyens de calcul MCA de la tension d'alimentation en cours du pulseur PU. Les calculateurs embarqués dans le véhicule V connaissent avec précision la position des différents actionneurs, et notamment de ceux contrôlant le pulseur, par exemple via des recopies du signal de commande. Il est donc possible d'utiliser dans le calcul de cm1 au moins une pondération représentative du débit d'air lorsque ce dernier à une influence sur l'estimation de la pollution intérieure.

La position du volet d'alimentation VA peut, par exemple, être déduite par les moyens de calcul MCA de la tension d'alimentation en cours du micromoteur définissant sa position. L'influence de la position du volet d'alimentation VA sur la pollution dans l'habitacle H est connue à l'avance grâce à des tests. Par exemple, si le volet d'alimentation VA est dans une position n'autorisant que l'alimentation en air intérieur (ou recirculé), alors la filtration est optimale. Ce paramètre de fonctionnement en cours est de préférence considéré comme un paramètre « d'ordre un » pour le calcul de cm1, au même titre que la seconde concentration massique cm2 et le spectre granulométrique sg2.

L'usure d'un filtre de dépollution FD1 ou FD2 a un impact notable sur l'efficacité de dépollution et sur le débit d'air passant. Elle peut, par exemple, être déduite du temps d'utilisation par les moyens de calcul MCA. A titre d'exemple, on peut déduire l'usure d'un filtre de dépollution du nombre de kilomètres parcourus par le véhicule depuis son dernier remplacement, et tenant compte éventuellement des lieux de circulation déduits des données de localisation (par exemple GPS) du véhicule. Il est donc possible d'utiliser dans le calcul de cm1 une pondération représentative de l'usure du filtre compte tenu des lieux de circulation habituels, par exemple.

On notera que les moyens de calcul MCA peuvent être agencés pour estimer la première concentration massique cm1 en fonction d'au moins un autre paramètre variable.

Ainsi, les moyens de calcul MCA peuvent être agencés pour estimer la première concentration massique cm1 en fonction également de paramètres météorologiques en cours de l'air extérieur et de l'air intérieur. Parmi ces paramètres météorologiques on peut notamment citer la température et l'hygrométrie.

La température extérieure et l'hygrométrie extérieure sont des informations qui sont habituellement disponibles dans un véhicule S (et respectivement fournies par un capteur de température embarqué et un capteur de pluie embarqué). Elles peuvent donc être facilement obtenues par les moyens de calcul MCA auprès d'un ordinateur de bord embarqué dans le véhicule S ou des capteurs concernés embarqués dans le véhicule S. L'hygrométrie extérieure a notamment une influence importante sur la pollution particulaire. En effet, il est connu qu'en cas de pluie la pollution particulaire extérieure devient quasiment nulle. Il est donc possible de prendre en compte dans le calcul de cm1 l'influence de la température extérieure et de l'hygrométrie extérieure sur la pollution extérieure.

La température intérieure et l'hygrométrie intérieure sont des informations qui sont habituellement disponibles dans un véhicule S. Elles peuvent donc être facilement obtenues par les moyens de calcul MCA auprès d'un ordinateur de bord embarqué dans le véhicule S ou des capteurs concernés embarqués dans le véhicule S, ou bien déduites de paramètres de fonctionnement. La température intérieure est systématiquement mesurée ou calculée pour les moyens de régulation de la température intérieure que comprend l'installation IT. Quant à l'hygrométrie intérieure, on sait que lorsque la réfrigération est enclenchée l'humidité relative dans l'habitacle H est de l'ordre de 30%, lorsque le chauffage est enclenché l'humidité relative dans l'habitacle H est de l'ordre de 50%, et lorsque la réfrigération est fermée et que le chauffage est enclenché l'humidité relative dans l'habitacle H est sensiblement égale à l'humidité relative à l'extérieur de l'habitacle H. L'hygrométrie et la température intérieures ont des influences connues sur la pollution à l'intérieur de l'habitacle H, si bien que l'on peut prendre en compte leur influence dans le calcul de cm1, par exemple sous la forme de pondérations.

En variante ou en complément, les moyens de calcul MCA peuvent être agencés pour estimer la première concentration massique cm1 en fonction également de la position géographique en cours de l'habitacle H. Par exemple, cette position géographique peut servir à affiner la valeur de la seconde concentration massique cm2 qui a été récupérée auprès d'un site d'informations SI. Par exemple, un roulage en milieu systématiquement pollué (tunnel ou périphérique) peut induire une surévaluation de la seconde concentration massique cm2 récupérée.

Cette position géographique peut être obtenue par les moyens de calcul MCA auprès d'un dispositif de positionnement par satellites ou d'une application téléphonique de détermination de position embarqué(e) dans le véhicule S.

En variante ou en complément, les moyens de calcul MCA peuvent être agencés pour estimer la première concentration massique cm1 en fonction également de la durée d'ouverture d'au moins un ouvrant (porte ou fenêtre) de l'habitacle H. Chaque ouverture d'un ouvrant constitue une perturbation. Par exemple, si une ouverture de vitre (ou portière) en statique est constatée pendant 20 secondes la qualité de l'air intérieur devient sensiblement égale à la qualité de l'air à l'extérieur de l'habitacle H, et si deux ouvertures de vitres (ou portières) en statique sont constatées pendant 10 secondes la qualité de l'air intérieur devient sensiblement égale à la qualité de l'air à l'extérieur de l'habitacle H.

Chaque durée d'ouverture peut être obtenue par les moyens de calcul MCA auprès d'un ordinateur de bord embarqué dans le véhicule S ou d'un capteur d'ouverture associé à l'ouvrant concerné.

On notera également que lorsque le véhicule S comprend un capteur de fumée de cigarette, éventuellement de type optique et par exemple installé dans l'habitacle H, ce capteur peut émettre un signal d'alerte dès qu'il détecte une concentration massique de fumée supérieure à un seuil (par exemple égal à environ 200 µg/m³). Dans ce cas, lorsque les moyens de calcul MCA sont alertés de ce dépassement de seuil, ils peuvent cesser de calculer cm1. Ce calcul devient en effet inutile étant donné qu'en l'absence de fumée de cigarette cm1 est généralement notablement inférieure à 200 µg/m³.

A titre d'exemple de réalisation, les moyens de calcul MCA peuvent être agencés, en l'absence de détection de fumée de cigarette, pour estimer la première concentration massique cm1 en fonction d'informations « d'ordre un » que sont la seconde concentration massique cm2 et le spectre granulométrique sg2 récupérés auprès d'un site d'informations SI, le volume de l'habitacle H, la proportion d'air extérieur alimentant l'habitacle H, la position géographique en cours du véhicule S, et des caractéristiques intrinsèques du premier filtre de dépollution FD1 (son type et/ou sa section de passage d'air et/ou son épaisseur, et éventuellement le nombre de ses plis (lorsqu'il est en technologie plissée)).

Puis, ils peuvent affiner cette estimation de la première concentration massique cm1 en fonction d'informations « d'ordre deux » que sont des paramètres météorologiques en cours de l'air extérieur (par exemple la température et l'hygrométrie), et/ou des paramètres météorologiques en cours de l'air intérieur (par exemple la température et l'hygrométrie), et/ou l'usure en cours du premier filtre de dépollution FD1, et/ou le débit d'air traversant le premier filtre de dépollution FD1, et/ou la durée d'ouverture d'ouvrant(s). Chaque information d'ordre deux correspond à une valeur prédéfinie (par exemple en pourcentage) qui est ajoutée à, ou retranchée de, ou qui pondère l'estimation de cm1.

Puis, si l'installation IT comprend également un second filtre de dépollution FD2, les moyens de calcul MCA peuvent encore plus affiner l'estimation de cm1 en fonction d'informations d'ordre deux ou trois que sont des paramètres météorologiques en cours de l'air intérieur (par exemple la température et l'hygrométrie), et/ou l'usure en cours du second filtre de dépollution FD2, et/ou le débit d'air traversant le second filtre de dépollution FD2, et/ou le type du second filtre de dépollution FD2, et/ou la section de passage d'air du second filtre de dépollution FD2, et/ou l'épaisseur du second filtre de dépollution FD2, et/ou l'éventuel nombre de plis du second filtre de dépollution FD2 (lorsqu'il est en technologie plissée). Chaque information d'ordre deux ou trois correspond à une valeur prédéfinie (par exemple en pourcentage) qui est ajoutée à, ou retranchée de, ou qui pondère l'estimation de cm1 obtenue après le premier affinage.

Les caractéristiques techniques intrinsèques du second filtre de dépollution FD2 (section de passage d'air, épaisseur et éventuel nombre de plis) peuvent, par exemple, induire une efficacité de dépollution égale à 50% pour les particules fines ayant des dimensions supérieures à 0,01 µm, égale à 70% pour les particules fines ayant des dimensions supérieures à 0,03 µm, égale à 90% pour les particules fines ayant des dimensions supérieures à 1 µm, et égale à 99% pour les particules fines ayant des dimensions supérieures à 2,5 µm. Ce second filtre de dépollution FD2 est notablement plus performant que le premier FD1, notamment du fait qu'il ne fait pas l'objet de contraintes sur les pertes de charge aérauliques.

On comprendra de ce qui précède que le calcul de cm1 prend en compte au moins des informations d'ordre un qui permettent une estimation, puis, si possible, des informations d'ordre deux (voire également d'ordre trois) qui permettent d'affiner cette estimation.

L'invention offre plusieurs avantages parmi lesquels :
- elle permet, grâce à un calcul relativement simple, fiable et facilement prédictif, effectué en une unique passe, d'estimer la concentration massique de particules fines contenues dans l'air intérieur d'une enceinte,
- elle permet de s'affranchir de l'utilisation d'un capteur de qualité d'air pour les particules fines, ce qui permet de réaliser des économies,
- elle peut permettre de mettre en oeuvre une stratégie consistant soit à calculer la concentration massique lorsque la pollution est uniquement liée à l'environnement (et donc en l'absence de fumée de cigarette), soit à agir spécifiquement sans réaliser le calcul précité lorsque des fumées de cigarette ont été détectées dans l'enceinte par un capteur dédié.

## Revendications

1. Dispositif (DE) pour estimer une première concentration massique de particules fines contenues dans l'air intérieur d'une enceinte (H) associée à une installation de traitement d'air (IT), l'installation comprenant au moins un filtre de dépollution (FD1), le dispositif comprenant des moyens de calcul (MCA) agencés pour estimer ladite première concentration massique en fonction au moins d'une seconde concentration massique de particules fines contenues dans l'air extérieur à ladite enceinte (H) et alimentant cette dernière (H) via ladite installation (IT), d'un spectre granulométrique dudit air extérieur, d'au moins une caractéristique technique et d'au moins un paramètre de fonctionnement en cours de ladite installation (IT), et d'un volume de ladite enceinte (H), **caractérisé en ce que**
lesdites caractéristiques techniques de ladite installation (IT) sont choisies dans un groupe comprenant un type dudit filtre de dépollution (FD1), une section de passage d'air dudit filtre de dépollution (FD1), une épaisseur dudit filtre de dépollution (FD1), et un nombre de plis dudit filtre de dépollution (FD1), et lesdits paramètres de fonctionnement en cours de ladite installation (IT) sont choisis dans un groupe comprenant une usure en cours dudit filtre de dépollution (FD1), un débit d'air traversant ledit filtre de dépollution (FD1), et une proportion d'air extérieur alimentant ladite enceinte (H).

2. Dispositif selon la revendication 1, **caractérisé en ce que** lesdits moyens de calcul (MCA) sont agencés pour récupérer, via un module de communication (MCN) associé à ladite enceinte (H), des informations représentatives de ladite seconde concentration massique et dudit spectre granulométrique, auprès d'au moins un site d'informations (SI) accessible via au moins un réseau de communication (RC).

3. Dispositif selon l'une des revendications 1 ou 2, **caractérisé en ce que** lesdits moyens de calcul (MCA) sont agencés pour estimer ladite première concentration massique en fonction également de paramètres météorologiques en cours dudit air extérieur et dudit air intérieur.

4. Dispositif selon l'une des revendications 1 à 3, **caractérisé en ce que** lesdits moyens de calcul (MCA) sont agencés pour estimer ladite première concentration massique en fonction également d'une position géographique en cours de ladite enceinte (H).

5. Dispositif selon l'une des revendications 1 à 4, **caractérisé en ce que** lesdits moyens de calcul (MCA) sont agencés pour estimer ladite première concentration massique en fonction également d'une durée d'ouverture d'au moins un ouvrant de ladite enceinte (H).

6. Véhicule (V) comprenant une enceinte (H) définissant un habitacle et alimentée en air par une installation de traitement d'air (IT), **caractérisé en ce qu'**il comprend en outre un dispositif d'estimation (DE) selon l'une des revendications précédentes.

7. Véhicule selon la revendication 6 **caractérisé en ce qu'**il est de type automobile.

## Patentansprüche

1. Vorrichtung (DE) zum Schätzen einer ersten Massenkonzentration von Feinpartikeln, die in der Innenluft eines Einschlusses (H) enthalten sind, der mit einer Luftaufbereitungsanlage (IT) verbunden ist, wobei die Anlage mindestens ein Reinigungsfilter (FD1) umfasst, wobei die Vorrichtung Rechenmittel (MCA) umfasst, die eingerichtet sind, um die erste Massenkonzentration in Abhängigkeit von mindestens einer zweiten Massenkonzentration von Feinpartikeln, die in der Luft außerhalb des Einschlusses (H) enthalten sind und diesen Letzteren (H) über die Anlage (IT) versorgt, einem Granulometriespektrum der Außenluft versorgt, mindestens einer technischen Charakteristik und mindestens einem aktuellen Betriebsparameter der Anlage (IT) sowie einem Volumen des Einschlusses (H) zu schätzen, **dadurch gekennzeichnet, dass**
die technischen Charakteristiken der Anlage (IT) aus einer Gruppe ausgewählt sind, die einen Typ des Reinigungsfilters (FD1), einen Luftpassagenquerschnitt des Reinigungsfilters (FD1), eine Stärke des Reinigungsfilters (FD1), und eine Anzahl von Falten des Reinigungsfilters (FD1) umfasst, und wobei die aktuellen Betriebsparameter der Anlage (IT) aus einer Gruppe ausgewählt sind, die eine aktuelle Abnutzung des Reinigungsfilters (FD1), einen Luftdurchsatz, der das Reinigungsfilter (FD1) durchquert, und einen Anteil an Außenluft, der den Einschluss (H) versorgt, umfasst.

2. Vorrichtung nach Anspruch 1, **dadurch gekennzeichnet, dass** die Rechenmittel (MCA) eingerichtet sind, um über ein Kommunikationsmodul (MCN), das mit dem Einschluss (H) assoziiert ist, Informationen, die für die zweite Massenkonzentration und das Granulometriespektrum repräsentativ sind, bei mindestens einer Informations-Website (SI), die über mindestens ein Kommunikationsnetz (RC) zugänglich ist, abzurufen.

3. Vorrichtung nach einem der Ansprüche 1 oder 2, **dadurch gekennzeichnet, dass** die Rechenmittel (MCA) eingerichtet sind, um die erste Massenkonzentration auch in Abhängigkeit von aktuellen meteorologischen Parametern der Außenluft und der Innenluft zu schätzen.

4. Vorrichtung nach einem der Ansprüche 1 bis 3, **dadurch gekennzeichnet, dass** die Rechenmittel (MCA) eingerichtet sind, um die erste Massenkonzentration auch in Abhängigkeit von einer aktuellen geographischen Position des Einschlusses (H) zu schätzen.

5. Vorrichtung nach einem der Ansprüche 1 bis 4, **dadurch gekennzeichnet, dass** die Rechenmittel (MCA) eingerichtet sind, um die erste Massenkonzentration auch in Abhängigkeit von einer Öffnungsdauer mindestens einer Tür/eines Fensters des Einschlusses (H) zu schätzen.

6. Fahrzeug (V), das einen Einschluss (H) umfasst, der einen Fahrzeuginnenraum definiert und mit Luft durch eine Luftaufbereitungsanlage (IT) versorgt ist, **dadurch gekennzeichnet, dass** es außerdem eine Schätzungsvorrichtung (DE) nach einem der vorstehenden Ansprüche umfasst.

7. Fahrzeug nach Anspruch 6, **dadurch gekennzeichnet, dass** es vom Typ Automobil ist.

## Claims

1. A device (DE) for estimating a first mass concentration of fine particles contained in the interior air of a chamber (H) associated with an air treatment installation (IT), the installation including at least one depollution filter (FD1), the device including calculation means (MCA) arranged to estimate said first mass concentration as a function of at least a second mass concentration of fine particles contained in the exterior air of said chamber (H) and supplying the latter (H) via said installation (IT), a granulometric spectrum of said exterior air, at least one technical characteristic and at least one current operating parameter of said installation (IT), and a volume of said chamber (H), **characterized in that**
said technical characteristics of said installation (IT) are selected from a group including a type of said depollution filter (FD1), a an air passage section of said depollution filter (FD1), a thickness of said depollution filter (FD1), and a number of folds of said depollution filter (FD1), and said current operating parameters of said installation (IT) are selected from a group including a current wear of said depollution filter (FD1), a flow of air passing through said depollution filter (FD1), and a proportion of exterior air supplying said chamber (H).

2. The device according to claim 1, **characterized in that** said calculation means (MCA) are arranged to retrieve, via an associated communication module (MCN), associated with said chamber (H), data representative of said second mass concentration and of said granulometric spectrum, from at least one data site (SI) accessible via at least one communication network (RC).

3. The device according to one of claims 1 or 2, **characterized in that** said calculation means (MCA) are arranged to estimate said first mass concentration as a function also of current meteorological parameters of said exterior air and of said interior air.

4. The device according to one of claims 1 to 3, **characterized in that** said calculation means (MCA) are arranged to estimate said first mass concentration as a function also of a current geographical position of said chamber (H).

5. The device according to one of claims 1 to 4, **characterized in that** said calculation means (MCA) are arranged to estimate said first mass concentration as a function also of a duration of opening of at least one opening panel of said chamber (H).

6. A vehicle (V) including a chamber (H) defining a passenger compartment and supplied with air by an air treatment installation (IT), **characterized in that** it further includes an estimation device (DE) according to one of the preceding claims.

7. The vehicle according to claim 6, **characterized in that** it is of the automobile type.
